# EUROPÄISCHE PATENTSCHRIFT

(11) **EP 0 646 057 B1**
(45) Veröffentlichungstag und Bekanntmachung des Hinweises auf die Patenterteilung: **02.01.1997**
(21) Anmeldenummer: 94913597.4
(22) Anmeldetag: 14.04.1994
(51) Int. Cl.: B27N 1/02

(54) **VERFAHREN ZUR HERSTELLUNG VON FASERPLATTEN**
METHOD OF MANUFACTURING FIBREBOARD
PROCEDE DE FABRICATION DE PANNEAUX AGGLOMERES FIBREUX

(30) Priorität: 17.04.1993 DE 4312564
(43) Veröffentlichungstag der Anmeldung: 05.04.1995
(73) Patentinhaber: GLUNZ AG, D-59063 Hamm (DE)
(72) Erfinder: HOFMAN, Michael, D-49597 Rieste (DE); KRAMER, Jürgen, D-21224 Rosengarten (DE); LUDÄSCHER, Christoph, D-66265 Heusweiler (DE); SCHENK, Heinz, D-47807 Krefeld (DE); TEUBER, Gert, D-49716 Meppen (DE)
(74) Vertreter: Rehberg, Elmar, Dipl.-Ing.
(86) Internationale Anmeldenummer: EP9401151
(87) Internationale Veröffentlichungsnummer: WO9423914

(56) Entgegenhaltungen:
- EP-A- 0 092 699
- WO-A-91/05020
- FR-A- 2 284 437
- FR-A- 2 437 292
- US-A- 3 428 592
- DATABASE WPI Week 8235, Derwent Publications Ltd., London, GB; AN 82-73616E & JP,A,57 120 414 (SANYO KOKUSAKU PULP) 27. Juli 1982

## Beschreibung

Die Erfindung bezieht sich auf ein Verfahren zur Herstellung von Faserplatten aus stückigen Holzpartikeln und Polyurethanleim als Bindemittel in einem Anteil unter 10 Gew.-%, wobei die Holzpartikel unter Wasserdampfüberdruck aufgeheizt und dabei zu Fasern zerkleinert werden, die durch einen Blasgang geführt und in einem Trockner getrocknet werden, bevor eine Mattenformung und eine Verpressung erfolgen. Die Erfindung zeigt gleichzeitig eine Faserplatte aus zu Fasern zerkleinerten stückigen Holzpartikeln und Polyurethanleim als Bindemittel in einem Anteil von unter 10 Gew.-%. Die neue Faserplatte läßt sich insbesondere im Möbelbau und als Verkleidungsplatte, auch im Feuchtraumbereich einsetzen.

Ein Verfahren der eingangs beschriebenen Art ist aus der EP-B-92 699 bekannt. Die Holzpartikel werden unter Druck mit Dampf behandelt und in einem Druckkocher-Aufbereiter, der eine einen Blasgang aufweisende Blasvorrichtung besitzt, zu heißen und nassen Fasern zerkleinert. Diese heißen und nassen Fasern werden teilweise entwässert, indem eine Vorabscheidung eines Teils des Wasserdampfs mittels eines Zyklons erfolgt, um nicht den gesamten gebildeten Wasserdampf durch den Trockner führen zu müssen. Die Fasern werden dann getrocknet und zu einer Matte geformt. Diese Matte wird durch Einwirkung von Hitze und Druck zu einer Faserplatte verpreßt. Als Bindemittel wird organisches Polyisocyanat auf die heißen und nassen Fasern im Blasgang aufgegeben. Als Polyurethanleim findet dabei somit ein organisches Polyisocyanat-Bindemittel Verwendung. Das Polyisocyanat ist vorzugsweise eine Mischung aus Diphenylmethan-4,4'-diisocyanat und Polymethylenpolyphenylpolyisocyanaten. Vorteilhaft wird das Bindemittel durch die Zugabe im Blasgang in eine gute Verteilung gebracht, so daß die gepreßte Faserplatte keine Leimflecken aufweist. Nachteilig ist der hohe Bindemittelanteil. Polyisocyanat wird mit einem Anteil von etwa 1 bis 10 Gew.-%, vorzugsweise 3 bis 6 Gew.-%, zugegeben. Gemäß den gegebenen Ausführungsbeispielen wird ein Anteil von 4 Gew.-% empfohlen, so daß erkennbar wird, daß mit einem Bindemittelanteil von etwa 1 Gew.-% keine Faserplatten mit brauchbaren technischen Eigenschaften hergestellt werden können. Ein solcher relativ hoher Bindemittelanteil ist erforderlich, weil ein Teil des Bindemittels durch eine Vorreaktion in der Presse nicht mehr genutzt werden kann. Nachteilig ist weiterhin die relativ hohe Gesamtrohdichte von etwa 850 kg/m³. Diese Faserplatten sind somit relativ schwer. Sie lassen sich entsprechend schwer handhaben, sind durch den hohen Bindemittelanteil teuer in der Herstellung, erbringen hohe Frachtkosten und erfordern z. B. im Möbelbau die Verwendung von derart dimensionierten Scharnieren und anderen Beschlägen, die das Gewicht der aus den Faserplatten hergestellten Möbelteile tragen können.

Ein Verfahren zur Herstellung von Faserplatten aus stückigen Holzpartikeln und Isocyanat als Bindemittel ist aus der DE-A-41 22 842 bekannt. Die Fasern werden mittels eines Blasgangs unter Expansion in einen Trockner überführt und dort getrocknet. Das Isocyanat wird jedoch auf die Fasern erst nach dem Verlassen des Blasgangs und vor dem Trocknen aufgesprüht. Auch damit läßt sich eine gute Verteilung des Bindemittels erzielen, so daß die fertige Faserplatte keine Leimflecken aufweist. Über Bindemittelanteile wird hier nichts ausgesagt, jedoch finden bei der Herstellung solcher Faserplatten Bindemittelanteile in der Größenordnung von etwa 4 bis 6 Gew.-% Anwendung, wodurch der aus der EP-B-92 699 bekannte Bereich von 1,0 bis 10 Gew.-% auf einen praktisch nutzbaren Bereich in der Größenordnung um 4,0 Gew.-% eingeschränkt wird. Nachteilig ist weiterhin, daß die gemäß DE-A- 41 22 842 hergestellten Faserplatten neben dem hohen Bindemittelverbrauch auch ein hohes spezifisches Gewicht aufweisen, welches in der Größenordnung von 770 bis 800 kg/m³ liegt.

Aus der Druckschrift "GoldenEdge Liteboard (600 kg/m³), Manufactured at Nelson Pine Industries Ltd New Zealand", verteilt auf dem 23. Internationalen Symposium on Particleboard, Pullman, Washington 1989 ist es bekannt, leichte mitteldichte Faserplatten herzustellen, die mit Harnstoffharz als Bindemittel verleimt sind. Diese leichten Faserplatten weisen eine Gesamtrohdichte in der Größenordnung von 600 kg/m³ auf und werden ausschließlich in einer kontinuierlichen Preßanlage hergestellt. Durch das geringe Gewicht können die Beschläge im Möbelbau bei der Weiterverarbeitung der Faserplatten relativ gering dimensioniert werden. Das Gewicht liegt um etwa 20 % unterhalb des Gewichtes von normalen mitteldichten Faserplatten und entspricht damit in etwa dem Gewicht von Spanplatten. Diese Faserplatten besitzen eine gute Oberfläche, so daß die Aufbringung eines Furniers, einer Beschichtung oder Lackierung keine Schwierigkeiten bietet. Infolge des geringen Gewichtes lassen sich solche Platten auch deutlich besser handhaben, und die Frachtkosten sind entsprechend geringer. Die Faserplatten werden in der Weise hergestellt, daß ein Profil der Rohdichte über den Querschnitt der Faserplatten entsteht, bei dem die Deckschichten eine Rohdichte von etwa 1100 kg/m³ und die Mittelschicht eine Rohdichte von etwa 530 kg/m³ aufweisen. Es wird auch von einer superleichten Faserplatte mit einer Rohdichte von 460 kg/m³ im Mittel berichtet, wobei in den Deckschichten die Rohdichte bis auf etwa 1000 kg/m³ ansteigt. Die Querzugsfestigkeit wird mit 0,45 N/mm², die Biegefestigkeit mit 20 N/mm² und der E-Modul mit 1600 N/mm2 angegeben. Damit werden die Mindestwerte der britischen Norm für Faserplatten (BS 1142/1989) nicht erreicht. Nachteilig ist an diesen leichten oder auch superleichten Faserplatten, daß das Harnstoffharz als Bindemittel in vergleichsweise hohem Anteil, etwa in der Größenordnung von 10 bis 15 Gew.-% eingesetzt werden muß, um aktzeptable mechanische Eigenschaften zu erreichen. Auch schlagen die bekannten üblichen Nachteile durch, die mit der Verwendung von Harnstoffharz als Bindemittel verbunden sind.

Aus Deppe/Ernst "Taschenbuch der Spanplattentechnik", 3. Auflage 1991, Seiten 402 und 403 sind mit Harnstoffharz als Bindemittel verleimte Faserplatten mit einem spezifischen Gewicht von etwa 680 bis 840 kg/m³ bekannt, so daß sich im Mittel eine Gesamtrohdichte von etwa 750 kg/m³ ergibt. Aus der Abbildung 372 auf Seite 402 ist der Zusammenhang zwischen maximaler Decklagenrohdichte und Plattenrohdichte bei solchen normalschweren mitteldichten Faserplatten erkennbar. Daraus wird offenbar, daß eine ausreichende Deckschichtverdichtung zur Erzielung akzeptabler Oberflächeneigenschaften nur dann erreichbar ist, wenn die Gesamtrohdichte mindestens in der Größenordnung von 750 kg/m³ beträgt. Gerade die für die Möbelherstellung unverzichtbaren Oberflächeneigenschaften können somit nach den Vorstellungen der Fachwelt nur dadurch erreicht werden, daß die Gesamtrohdichte möglichst hoch, auf jeden Fall aber oberhalb 750 kg/m³ gewählt wird. Je höher die Gesamtrohdichte ist, desto bessere Oberflächeneigenschaften sind zu erwarten.

Der Erfindung liegt die Aufgabe zugrunde, ein Verfahren zur Herstellung von Faserplatten der eingangs beschriebenen Art sowie solche Faserplatten aufzuzeigen, die einen möglichst naturnahen Rohstoff darstellen, der die Nachteile von gewachsenem Holz, insbesondere dessen Inhomogenitäten, z. B. Anisotropie, Astigkeit usw., vermeidet. Gewachsenes Holz weist bekanntlich eine Rohdichte in der Größenordnung von 450 bis 550 kg/m³ auf.

Erfindungsgemäß wird dies bei dem Verfahren der eingangs beschriebenen Art dadurch erreicht, daß die Fasern in einem eine Gesamtrohdichte von etwa 550 bis 650 kg/m³ ergebenden Anteil und das Bindemittel mit etwa 0,5 bis 4 Gew.-%, insbesondere mit 1,0 bis 3,0 Gew.-%, bezogen auf atro Holz, eingesetzt werden, und daß der beim Aufheizen gebildete Wasserdampf ohne Vorabscheidung auch durch den Trockner geführt und dabei zur Bildung einer die Vorreaktion des Bindemittels behindernde Umhüllung aus Polyharnstoff genutzt wird.

Damit wird zwar nicht ganz die Rohdichte von gewachsenem Holz erreicht, die Faserplatten sind jedoch bereits erheblich (20 %) leichter als die bekannten mitteldichten Faserplatten. Überraschend ist, daß sich mit dem neuen Verfahren leichte Faserplatten herstellen lassen, die dennoch gute mechanische Eigenschaften, auch Oberflächeneigenschaften, aufweisen. Die Festigkeit ist hinreichend. Die Faserplatten sind lackierfähig, furnierbar oder beschichtbar. Sie lassen sich durch Fräsen im Bereich der Kanten bearbeiten und damit ideal für die Möbelherstellung einsetzen. Infolge der verringerten Holzanteile verringern sich auch die Herstellkosten. Auch die Herstellzeiten, insbesondere die Preßzeiten, sind verkürzt. Durch das geringere Gewicht ergibt sich eine verbesserte Handhabbarkeit, eine verringerte Beanspruchung der Beschläge, geringere Frachtkosten und eine Werkzeugschonung bei der Bearbeitung.

Überraschend und den bisherigen Vorstellungen der Fachwelt zuwiderlaufend lassen sich solche leichten Faserplatten mit den beschriebenen Eigenschaften auch bereits mit niedrigen Gewichtsanteilen von Polyurethanleim als Bindemittel herstellen. Unter Polyurethanleim wird ein organisches Polyisocyanat allein oder in Abmischungen mit Polyolen oder Polyaminen verstanden. Der Erfindung liegt in verfahrensmäßiger Hinsicht die Überlegung zugrunde, trotz der einwirkenden hohen Temperaturen die Vorreaktion des Bindemittels soweit zu behindern, daß selbst bei geringen Bindemittelanteilen noch hinreichend reaktionsfähiges Bindemittel in der Presse zur Verfügung steht. Während bisher der Wasserdampf am Ende des Blasganges aus Energieersparnisgründen separiert wurde, wird jetzt der Wasserdampf belassen und Aufbau einer Schutzhülle aus Polyharnstoff um die Tröpfchen des Bindemittels herum genutzt. Es findet eine Grenzflächenreaktion zwischen den heißen Wasserdampftröpfchen und dem Bindemitteltröpfchen statt, wodurch die Schutzhülle aus Polyharnstoff entsteht. Diese Schutzhülle inhibiert ein vorzeitiges Ausreagieren des Bindemittels. Durch den Preßvorgang in der Presse wird die Schutzhülle zerstört, und das vorher eingeschobene Bindemittel steht für die Reaktion zur Verfügung.

Mit dem neuen Verfahren lassen sich naturnahe Faserplatten herstellen, denn bei Verwendung eines Bindemittelanteils von z. B. nur 2 % besteht die Faserplatte aus 98 % Holz. Weiterhin ist vorteilhaft, daß die Fräsbarkeit der neuen Faserplatten auch in der dritten Dimension, also in Richtung der Plattendicke gegeben ist. Dies ist z. B. wichtig, wenn reliefartig gestaltete Küchenfronten hergestellt werden sollen. Infolge der guten Querzugsfestigkeit können die Platten bzw. die daraus hergestellten Möbel auch problemlos mit Scharnieren, Beschlägen o. dgl. ausgestattet werden.

Die Anteile Holz und Bindemittel waren bei bisher im Stand der Technik hergestellten Faserplatten in gegenläufiger Weise kombiniert. Wenn relativ leichte Platten hergestellt werden sollten, dann erwies sich die Anhebung des Bindemittelanteils als erforderlich, um hinreichende Eigenschaften, insbesondere Lackierbarkeit und Querzugfestigkeit, zu erzielen. So wird im Stand der Technik die Vorstellung erkennbar, daß bei Verringerung der Gesamtrohdichte von z. B. 800 auf z. B. 600 kg/m³ das Harnstoffharz als Bindemittel nicht mehr mit 10, sondern mit 15 Gew.-% eingesetzt werden muß.

Besonders vorteilhaft ist es, wenn der Polyurethanleim auf die Fasern nach dem Verlassen des Blasgangs und vor dem Trocknen aufgesprüht wird. Dabei wird das Bindemittel nicht nur zu einem möglichst späten Zeitpunkt im Fertigungverfahren der Faserplatte hinzugegeben; nach der Expansion am Ende des Blasgangs liegen Bindemittel und Wasserdampf in Form feinverteilter Tröpfchen vor, wodurch die Bildung der Schutzhülle begünstigt wird.

Bei der Herstellung der Faserplatten durch Heißpressen werden Druck, Temperatur und Zeit vorteilhaft so geführt, daß ein Profil der Rohdichte über den Querschnitt der Faserplatte entsteht, bei dem die Deckschichten eine Rohdichte von etwa 750 bis 950 kg/m³ und die Mittelschicht eine Rohdichte von etwa 550 bis 600 kg/m³ erhalten. Trotz dieser relativ niedrigen Rohdichte im Bereich der Deckschichten ergeben sich hinreichende Eigenschaften für eine Furnierbarkeit, Lackierbarkeit oder Beschichtung. Die Gesamtrohdichte wird damit auch bei relativ dicken Deckschichten nicht allzusehr angehoben.

Die neue Faserplatte weist erfindungsgemäß eine Gesamtrohdichte von etwa 550 bis 650 kg/m³ auf und enthält als Bindemittel Polyurethanleim mit nur etwa 0,5 bis 4 Gew.-%, insbesondere mit 1,0 bis 3,0 Gew.-%. Damit kommt die neue Faserplatte dem gewachsenen Holz als Rohstoff bereits sehr nahe, ohne dessen Nachteile zu besitzen. Zwar ist die Gesamtrohdichte noch etwas höher als bei gewachsenem Holz, jedoch ist die Verwendung eines, wie beschrieben, derart niedrigen Bindemittelanteils überraschend. Durch den relativ hohen Holzanteil wird der natürliche Rohstoff begründet. Als weitere Vorteile ergeben sich sämtliche Vorteile, die bereits im Zusammenhang mit dem erfindungsgemäßen Herstellverfahren beschrieben wurden.

Zur Erzielung eines besonders schlanken Profils der Rohdichte über den Querschnitt der Faserplatte kann jede Deckschicht nur eine Dicke von etwa 10 % der Gesamtdicke der Faserplatte aufweisen. Die Mittelschicht ist mit etwa 80 % relativ ausgedehnt. Es versteht sich, daß es sich insbesondere bei kontinuierlicher Herstellung ein Übergangsbereich zwischen Mittelschicht und Deckschicht ergibt.

Die Faserplatte kann eine Rohdichte in der Deckschicht von über 900 kg/m³ bei einer Gesamtrohdichte von unter 650 kg/m³ aufweisen. Eine solche Faserplatte weist eine hohe Verdichtung in der Deckschicht auf, die durch besondere Maßnahmen bei der Herstellung noch gesteigert werden kann. Es ergibt sich dann eine gute Lackierbarkeit infolge der dichten Oberfläche.

Die Erfindung wird nachfolgend anhand von Beispielen weiter erläutert. In der nachfolgenden Tabelle

| Zusammensetzung | | I | II | III | IV | V | VI |
|---|---|---|---|---|---|---|---|
| Bindemittelanteil (PMDI) | % | 0,6 | 0,9 | 1,8 | 2,3 | 3,0 | 4,0 |
| Hydrophobierungsmittel | % | 2 | 2 | 1 | 1,5 | - | 0,5 |
| Holzfasern | % | 97,4 | 97,1 | 97,2 | 96,2 | 97 | 95,5 |

| Eigenschaften: | | | | | | | |
|---|---|---|---|---|---|---|---|
| Dichte | kg/m³ | 634 | 603 | 610 | 581 | 599 | 603 |
| Querzugfestigkeit | N/mm² | 0,65 | 0,69 | 0,70 | 0,68 | 0,71 | 0,71 |
| Biegefestigkeit | N/mm² | 19,5 | 20,9 | 21,8 | 20,5 | 22,3 | 22,8 |
| Quellung 2h | % | 4,0 | 3,5 | 3,3 | 3,3 | 3,2 | 3,2 |

werden die Zusammensetzung und die sich jeweils daraus ergebenden Eigenschaften anhand von sechs Beispielen deutlich. Es ist erkennbar, daß der Bindemittelanteil zwischen 0,6 bis 4 % variiert wurde, wobei die mittleren Beispiele den Bereich von 1,0 bis 3,0 Gew.-% abdecken. Die zugehörigen Dichten umspannen den Bereich von 550 bis 650 kg/m³. Es ist erkennbar, daß geringe Bindemittelanteile mit hohen Dichten kombiniert wurden. Dies zielt darauf ab, dennoch ausreichende Querzugfestigkeiten zu erreichen. Die erzielbaren Querzugfestigkeiten, die in der Größenordnung von 0,7 N/mm² liegen, sind bei Berücksichtigung des geringen Bindemittelanteils relativ hoch. Sie erfüllen Normvorstellungen und sind insbesondere wichtig für das Anbringen von Beschlägen, Scharnieren u. dgl., wie es der Möbelbau erforderlich macht. Die sich ergebenden Biegefestigkeiten sind, wie allgemein bei allen leichten Faserplatten, zwar relativ niedrig; für das vorgesehene Anwendungsgebiet ist die Biegefestigkeit jedoch nicht wichtig.

In der nachfolgenden Tabelle ist der Unterschied des Anmeldungsgegenstandes zu zwei Faserplatten aus dem Stand der Technik erkennbar. In der ersten Spalte ist eine mitteldichte Faserplatte, die mit Harnstoffharz verleimt ist, angegeben. Der Bindemittelanteil beträgt 10 Gew.-% bei einer Dichte von 750 kg/m³. In der zweiten Spalte ist ein Stand der Technik wiedergegeben, wie er einleitend beschrieben wurde, also eine harnstoffharzverleimte, vergleichsweise leichtere Faserplatte mit einer Dichte von 600 kg/m³, wobei dabei jedoch ein erhöhter Bindemittelanteil von 15 Gew.-% zum Einsatz kommt. Die Querzugfestigkeit fällt gegenüber der normalen mitteldichten Faserplatte etwas ab, ist aber immernoch hinreichend. Gleiches gilt für den Anmeldungsgegenstand der in der dritten Spalte angegeben ist. Der wesentliche Unterschied des Anmeldungsgegenstandes ist in dem unerwartet niedrigen Bindemittelanteil zu sehen, verbunden mit einer gegenüber normalen Faserplatten verminderten Dichte. Die neuen Faserplatten sind damit leicht, infolge des geringen Bindemittelanteils auch relativ preiswert herstellbar und erbringen dennoch bei guter Querzugfestigkeit die erforderlichen mechanischen Eigenschaften.

| | | mitteldichte Faserplatten | Golden Edge 600 | Anmeldungsgegenstand, polyurethanverleimt |
|---|---|---|---|---|
| Bindemittelanteil | Gew.-% | 10 | 15 | 2 |
| Dichte | kg/m³ | 750 | 600 | 600 |
| Querzugfestigkeit | N/mm² | 0,80 | 0,70 | 0,70 |

## Patentansprüche

1. Verfahren zur Herstellung von Faserplatten aus stückigen Holzpartikeln und Polyurethanleim als Bindemittel in einem Anteil unter 10 Gew.-%, wobei die Holzpartikel unter Wasserdampfüberdruck aufgeheizt und dabei zu Fasern zerkleinert werden, die durch einen Blasgang geführt und in einem Trockner getrocknet werden, bevor eine Mattenformung und eine Verpressung erfolgen, dadurch gekennzeichnet, daß die Fasern in einem eine Gesamtrohdichte von etwa 550 bis 650 kg/m³ ergebenden Anteil und das Bindemittel mit 0,5 bis 4,0 Gew.-%, insbesondere mit 1,0 bis 3,0 Gew.-%, bezogen auf atro Holz, eingesetzt werden, und daß der beim Aufheizen gebildete Wasserdampf ohne Vorabscheidung auch durch den Trockner geführt und dabei zur Bildung einer die Vorreaktion des Bindemittels behindernden Umhüllung aus Polyharnstoff genutzt wird.

2. Verfahren nach Anspruch 1, dadurch gekennzeichnet, daß der Polyurethanleim auf die Fasern nach dem Verlassen des Blasgangs und vor dem Trocknen aufgespritzt wird.

3. Verfahren nach Anspruch 1 oder 2, dadurch gekennzeichnet, daß bei der Herstellung der Faserplatten durch Heißpressen Druck, Temperatur und Zeit so geführt werden, daß ein Profil der Rohdichte über den Querschnitt der Faserplatte entsteht, bei dem die Deckschichten eine Rohdichte von 750 bis 950 kg/m³ und die Mittelschicht eine Rohdichte von 550 bis 600 kg/m³ erhalten.

4. Faserplatte aus zu Fasern zerkleinerten stückigen Holzpartikeln und Polyurethanleim als Bindemittel in einem Anteil von unter 10 Gew.-%, dadurch gekennzeichnet, daß die Faserplatte eine Gesamtrohdichte von 550 bis 650 kg/m³ aufweist und Bindemittel mit etwa 0,5 bis 4,0 Gew.-%, insbesondere mit 1,0 bis 3,0 Gew.-%, enthält.

5. Faserplatte nach Anspruch 4, dadurch gekennzeichnet, daß zur Erzielung eines schlanken Profils der Rohdichte über den Querschnitt der Faserplatte jede Deckschicht eine Dicke von etwa 10 % der Gesamtdicke der Faserplatte aufweist.

6. Faserplatte nach Anspruch 5, dadurch gekennzeichnet, daß sie eine Rohdichte in der Deckschicht von über 900 kg/m³ bei einer Gesamtrohdichte von unter 650 kg/m³ aufweist.

## Claims

1. A method for the production of fibreboards made from pieces of wooden particles, and a polyurethane glue used as a binder in an amount of less than 10 percent by weight, in which the wooden particles are heated by pressurized steam and thus refined into fibres, the fibres being subjected to a blow line, being dried in a drying device, and then formed in the shape of a mat and pressed to form the fibreboards, **wherein** the fibres are applied in an amount resulting in a bulk density of the whole fibreboard of approximately 550 kg/m³ to 650 kg/m³, and where the binder is applied in an amount of 0.5 to 4.0 percent by weight, preferably in the range of 1.0 to 3.0 percent by weight, with respect to dry wooden particles, and where the steam generated during the heating of the wooden particles is passed through the drying device without having a portion thereof separated out and is used with the binder to form a coating layer out of polycarbamide to prevent the fibres from forming a preliminary reaction with the binder.

2. The method of claim 1, **wherein** polyurethane glue is sprayed onto the fibres after leaving the blow line and before entering the drying device.

3. The method of claim 1 or 2, **wherein** the pressure, temperature, and time during the production of the fibreboards are varied so that a profile of the bulk density over the thickness of the fibreboard results in which the outer layers have a bulk density of 750 kg/m³ to 950 kg/m³, and the middle layer has a bulk density of 550 kg/m³ to 600 kg/m³.

4. A fibreboard made from pieces of wooden particles refined to fibres, and polyurethane glue as a binder in an amount of less than 10 percent by weight, **wherein** the fibreboard has a total bulk density of 550 kg/m³ to 650 kg/m³ and contains binder in an amount of about 0.5 to 4.0 percent by weight, preferably in the range of 1.0 to 3.0 percent by weight.

5. The fibreboard of claim 4, **wherein** each outer layer of the fibreboard has a thickness of about 10 percent of the total thickness of the fibreboard, whereby a lean profile of the bulk density is formed.

6. The fibreboard of claim 5, **wherein** the fibreboard has a bulk density in the outer layers of more than 900 kg/m³, and a total bulk density of less than 650 kg/m³.

## Revendications

1. Procédé de fabrication de panneaux agglomérés de fibres à partir de particules de bois en morceaux et de colle de polyuréthane servant de liant, dans une proportion inférieure à 10 % en poids, les particules de bois étant chauffées sous une surpression de vapeur d'eau et étant ce faisant fragmentées en fibres, qui sont guidées à travers un couloir de soufflage et séchées dans un séchoir, avant que s'effectue un formage en mat et un pressage, caractérisé en ce que les fibres sont ajoutées dans une proportion donnant une masse volumique apparente totale d'environ 550 à 650 kg/m³ et le liant à raison de 0,5 à 4,0 % en poids, en particulier à raison de 1,0 à 3,0 % en poids, rapporté au bois de sicc. abs., et en ce que la vapeur d'eau formée lors du chauffage est envoyée aussi à travers le séchoir, sans séparation préalable et est utilisée dans ce cas pour la formation d'une enveloppe en polycarbamide, empêchant la réaction prématurée du liant.

2. Procédé selon la revendication 1, caractérisé en ce que la colle de polyuréthane est pulvérisée sur les fibres après la sortie du couloir de soufflage et avant le séchage.

3. Procédé selon la revendication 1 ou 2, caractérisé en ce que lors de la fabrication des panneaux agglomérés de fibres par pressage à chaud, la pression, la température et le temps sont conduits de manière qu'il se forme sur la section transversale du panneau aggloméré de fibres, un profil pour lequel les couches de couverture obtiennent une masse volumique apparente de 750 à 950 kg/m³ et la couche centrale une masse volumique apparente de 550 à 600 kg/m³.

4. Panneau aggloméré de fibres en particules de bois en morceaux, fragmentés en fibres, et colle de polyuréthane servant de liant dans une proportion inférieure à 10 % en poids, caractérisé en ce que le panneau aggloméré de fibres présente une masse volumique apparente totale de 550 à 650 kg/m³ et contient des liants à raison de 0,5 à 4,0 % en poids environ, en particulier à raison de 1,0 a 3,0 % en poids.

5. Panneau aggloméré de fibres selon la revendication 4, caractérisé en ce que pour obtenir un profil élancé de la masse volumique apparente sur la section transversale du panneau aggloméré de fibres, chaque couche de couverture présente une épaisseur d'environ 10 % de l'épaisseur totale du panneau aggloméré de fibres.

6. Panneau aggloméré de fibres selon la revendication 5, caractérisé en ce qu'il présente une masse volumique apparente dans la couche de couverture, supérieure à 900 kg/m³ pour une masse volumique apparente totale inférieure à 650 kg/m³.
